# EUROPEAN PATENT APPLICATION

(11) **EP 1 933 577 A1**
(43) Date of publication of application: **18.06.2008**
(21) Application number: 06775600.7
(22) Date of filing: 05.09.2006
(51) Int. Cl.: H04Q 7/38

(54) **A METHOD FOR REALIZING SERVICE ACTIVATION OPERATION AND USER TERMINAL REALIZING THE METHOD**

(30) Priority: 05.09.2005 CN 200510098749; 08.03.2006 CN 200610034249
(71) Applicant: Huawei Technologies Co., Ltd., Longgang District Shenzhen Guangdong 518129 (CN)
(72) Inventor: SHI, Youzhu, Guangdong 518129 (CN); XU, Peili, Guangdong 518219 (CN)
(74) Representative: Hengelhaupt, Jürgen
(86) International application number: PCT/CN2006/002284
(87) International publication number: WO 2007/028329

(57) **Abstract**

A method for realizing service activation operation. The method comprises: attaching the service activation information inputted by a user in service activation information field for taking each service activation operation required information in service activation message, and transmitting the information to network side, the network side identifies the initial content of service activation according to the received service activation information so that realizing initiating for service activation operation. The present invention also discloses a terminal device, the terminal device comprises a set unit and a control unit and a transmission unit. With the present invention, the terminal can complete the corresponding service activation operation as long as SIP terminals support basic function or SIP terminals through a expanding support of fixed and adapted to all service activation operation mode, in packet central network which call control signaling is SIP, without needing the SIP terminal performs different expanding supports for activation operation of different services, and reducing the manufacture cost and sale price of a SIP terminal.

## Description

### Field of the Invention

The present invention relates to a service activation technology, and in particular, to a method and a device for implementing a service activation operation.

### Background of the Invention

With the maturation of the packet switching technology, the traditional telecommunication network based on circuit switching is now developed in a direction of the broadband telecommunication network based on packet switching, and one of the developing trends of the prior art is adopting Session Initiation Protocol (SIP) as the call control signaling in the packet switched telecommunication core network. For example, the Internet Protocol Multimedia Subsystem (IMS) network defined by the 3^{rd} Generation Partnership Project (3GPP) standard organization is used as the core network of the Next Generation Network (NGN) at present by the Telecommunication Standardization Sector of the International Telecommunications Union (ITU-T) and European Telecommunications Standards Institute (ETSI), where the call control signaling adopted by the IMS network is SIP.

There are two modes when a user activates a service according to different service types, i.e., a permanent mode, in which the service is activated for all the calls, and a temporary mode, in which the service is activated for an individual call request, i.e., a temporary activation. For the former mode, when the service is activated, the service may be effective for all the calls. For example, when an "Originating Identification Presentation" service is activated, this service is effective for all the incoming calls of the user. For the latter mode, when the service is activated, this service is only effective for a specified call, and when the specified call is released, the service becomes invalid immediately or after a specified period of time, such as a "Temporary mode of Originating Identification Restriction". Specifically, the service activation modes may be approximately classified into four categories:

1) Subscription Activation

When a user subscribes with an operator for a service through a certain manner, this service may be used without the necessity of performing any operation. For example, for the "Originating Identification Presentation" service, when the user subscribes with the operator for this service, this service may be used directly.

2) Registration Activation

After a user subscribes with an operator for a service, this service may be used only when a registration request operation for the application of this service is initiated via a terminal and a man machine interface and the operation is successfully accomplished. For example, for a "Call Forwarding On Busy" service, when the user is successfully registered on the terminal, only the incoming call that satisfies a condition may be forwarded because of the application of this service. Generally, the user may initiate a cancellation request operation via a man machine interface operation corresponding to the "registration activation", so as to cancel the registration for the service, i.e., "activation cancellation". The user may also verify whether a service is registered via a certain operation, i.e., "activation verification".

3) Temporary Activation

When a user wants to use a service temporarily for a specific call, the service may be activated temporarily via a terminal and a man machine interface operation, so that the service may be used for a designated specified call. When the specified call ends, the network may cancel this service application automatically. For example, for an "Abbreviated Dialing Call" service, after the user has registered an abbreviated number successfully on the terminal, when a call is to be initiated for this abbreviated number, it should be indicated via the terminal during the call that the abbreviated dialing call service is used in this call. The "Temporary mode of Originating Identification Restriction" service is another example.

4) Temporary Deactivation

Similar to the "temporary activation", the user may also initiate a service activation operation of "temporary deactivation", so as to indicate that the application of a service may be deactivated temporarily for a specified call. For example, a user has registered and activated a "Call Waiting" service. When initiating a first call, the user may indicate via an operation on the terminal that the application of call waiting should be deactivated temporarily for the current call. Thus, when the call is established, the user may not be influenced by a new incoming call.

Obviously, different service activation modes imply different manners with which a network triggers a service. Generally, three kinds of information, i.e., service type, operation type and supplementary information, are included in the service activation modes.

At present, in a packet switched telecommunication network architecture in which SIP is used as the call control signaling of the core network, the service activation is implemented as follows: a new SIP message parameter, such as a new SIP header field or a service subscription event packet is added for the service, and a configuration is performed on a SIP terminal by the user. When the service is temporarily activated, a message carrying the header field or the event packet is sent to the network.

For example, in the Telecommunications and Internet Converged Services and Protocols for Advanced Networking (TISPAN) of ETSI, for implementing services of "Malicious Call Trace" and "Call Back On Busy" that can be temporarily activated, a Malicious Call Identification (MCID) event packet and a Completion of Communication sessions to Busy Subscriber (CCBS) event packet need to be added in SIP, so as to represent the operation indication of temporary activation of the "Malicious Call Trace" service and the "Call Back On Busy" service. Then the user performs configuration on a SIP terminal. When the user wants to temporarily activate one of the above services, a SIP message carrying the MCID event packet or the CCBS event packet is sent to the network, and then the "Malicious Call Trace" service or the "Call Back On Busy" service may be temporarily activated.

In another example, when the temporary activation of an "Advice of Charge (AoC)" service is to be implemented in TISPAN, a P-AoC header field needs to be added in the SIP message to indicate the AoC service, and the P-AoC header field needs to be configured on the SIP terminal by the user, so as to temporarily activate the AoC service when a call is initiated.

Besides the AoC service, ten Public Switched Telephone Network/Integrated Service Digital Network simulation (PSTN/ISDN Simulation) services are defined in TISPAN, and two services are taken as examples for illustrating the implementing process.

With respect to the activation operation of an Originating Identification Restriction (OIR) service, a SIP header field *Privacy* is used for carrying the operation indication, and is configured on the user terminal by the user. The specific description of this service may be obtained from the relevant draft and will not be described in detail here.

With respect to the subscription of a Message Waiting Indication (MWI) service, which belongs to the registration activation, an event packet *message-summary* defined in a SIP header field Event is used for carrying the operation indication, and is configured on the user terminal by the user. The specific description of this service may be obtained from the relevant draft and will not be described in detail here.

It can be seen from above that in TISPAN, it is attempted to satisfy requirements of different service activation modes through adding different SIP header fields or event packets for each service activation mode, and performing configuration on the user terminal by the user. In other words, the service connotation of the service activation mode should be understood by the user terminal, and the user terminal should identify the trigger content of the service and instruct the network to perform the corresponding service triggering. For example, the user terminal identifies the P-AOC header field, and the network triggers the AoC service according to the P-AOC header field.

Obviously, although only eleven Simulation services are defined in TISPAN at present, it cannot be anticipated by TISPAN what new service application may appear in the future. Therefore, the user terminal also encounters the problem of upgrading due to the extension of a new service. For example, an operator puts forward a fee discount service, in which a lower fee may be charged, but the quality of communication is also worse. When a user initiates a call, the service activation mode "temporary activation" may be used for activating this service in the current call. According to the principle of TISPAN, a new SIP header field has to be extended for identifying the fee discount service.

In the existing methods for implementing the service activation operation, a dedicated activation mode needs to be configured for each service that is to be activated, i.e., a new SIP header field or event packet needs to be extended for identifying the service. Thus, following problems may be brought about.

1. The service request comes from the operator, but it is impossible for the operator to anticipate all the activation services at one time. Therefore, each time when a new activation service is put forward, a new SIP header field or event packet should be extended, so as to identify the new activation service. For a SIP user terminal, the new service may only be used after upgrading the user terminal. Thus, the operation cost is increased, and inconvenience may be brought about when the SIP user terminal uses the activation service, which is not beneficial for the extension of the service.

2. Even if a plurality of service activation functions may be configured for a SIP user terminal during the development of the SIP user terminal, the SIP user terminal should also be able to support different service activation modes besides the basic functions, because the activation modes of the services are different. Therefore, the development cost of the SIP terminal is increased.

### Summary of the Invention

The present invention provides a method for implementing the service activation operation, which facilitates the popularization of the new service and may reduce the manufacturing cost of the user terminal.

The present invention further provides a user terminal adapted to implement the method according to the invention, with which the manufacturing cost of the user terminal may be reduced and the popularization of the new service may be facilitated.

The specific technical schemes of the present invention are as follows:

A method for implementing a service activation operation, including:

putting service activation information input by a user into a service activation information element of a service activation message, and sending the service activation message to a network, wherein the service activation information element is adapted to carry information required by various service activation operations; and

triggering, by the network, the service activation operation according to the service activation information received.

The service activation information includes: a service type, adapted to identify different services; and/or an operation type, adapted to identify different operations performed for the services.

The service activation information further includes: supplementary information; and the supplementary information comprises: a user number and/or a password and/or time.

The service activation message is a Session Initiation Protocol (SIP) message; and the SIP message includes: a SIP INVITE message, a SIP INFO message, a SIP SUBSCRIBE message, a SIP INSTANT MESSAGE and a SIP REGISTER message; or

the service activation message is a Hyper Text Transport Protocol (HTTP) message.

The service activation message is a SIP message; and

the service activation information element is a parameter in a Request-Uniform Resource Identifier and/or a To header field in the SIP message.

The service activation information element is a newly added header field or an event packet of the SIP message.

The Request-Uniform Resource Identifier in the SIP message carries a public service identifier or a user identifier.

The service activation message is an HTTP message; and

the service activation information is carried with an eXtended Markup Language Configuration Access Protocol message or a Simple Object Access Protocol message.

On a call control node in the network, a trigger rule of the information in the service activation information element corresponding to different services is preconfigured; and a method for triggering the service activation operation is:

triggering the service activation message to a corresponding service control node through a trigger rule matching information carried in the service activation message, when the call control node receives the service activation message.

A user terminal, comprising:

a configuring unit, adapted to provide a user with an operation interface, and receive service activation information input by the user that is required for a service activation operation;

a controlling unit, adapted to write the service activation information received by the configuring unit into a service activation information element in a service activation message, wherein the service activation information element is adapted to carry the service activation information required for various service activation operations; and

a sending unit, adapted to send the service activation message generated.

The controlling unit writes the service activation information into an extended parameter in a Request-Uniform Resource Identifier and/or a To header field in a SIP message.

The controlling unit writes the service activation information into a newly extended header field or event packet in the SIP message.

The controlling unit writes the service activation information into a Simple Object Access Protocol message or an eXtended Markup Language Configuration Access Protocol message that belongs to HTTP messages.

The user terminal is a SIP user terminal device; and

the configuring unit, controlling unit and sending unit are arranged on the SIP user terminal device.

The user terminal comprises a terminal device in a traditional circuit switched domain and a corresponding SIP proxy device; and

the configuring unit is arranged on the terminal device in the traditional circuit switched domain, and the controlling unit and the sending unit are arranged on the SIP proxy device.

It can be seen from above technical schemes that with the solution provided by the invention, in a packet switched core network where SIP is used as the call control signaling, when the SIP terminal supports fundamental functions, or when the SIP terminal has a fixed extension support that is applicable for all the service activation modes, the corresponding service activation operation may be performed on the terminal without the necessity of performing different extensions for different service activation operations, i.e., it is not required to perform different extension support for different service activation operations by the SIP terminal. Therefore, the manufacturing cost and selling price of the SIP terminal may be reduced.

Furthermore, when the operator puts forward a new service, it is not required to extend a new SIP header field or event packet, i.e., it is not required to upgrade the SIP terminal to support the new service. Therefore, it is avoided that the implementation of a service activation mode depends on the extension support of the terminal. Thus, the operating cost of the new service may be saved, the usage of the SIP terminal may be facilitated, and it is beneficial for the popularization of the new service.

### Brief Description of the Drawings

Figure 1 is a schematic diagram showing the networking of a packet switched core network;

Figure 2 is a flow chart for implementing a service activation mode according to the invention; and

Figure 3 is a schematic diagram showing the structure of a terminal device according to the invention.

### Detailed Description of the Embodiments

The core idea of the present invention is: putting service activation information, which is input by a user, into a service activation information element of a service activation message that is adapted to carry information required for various service activation operations; sending the service activation message to the network; and identifying, by the network, the trigger content of the service activation according to the service activation information received, so as to implement triggering the service activation operation.

In order to make the object, technical scheme and advantages of the invention more apparent, the invention is described in detail in conjunction with drawings and preferred embodiments hereinafter.

In the invention, the service activation modes as described specifically refer to the registration activation, temporary activation and temporary deactivation.

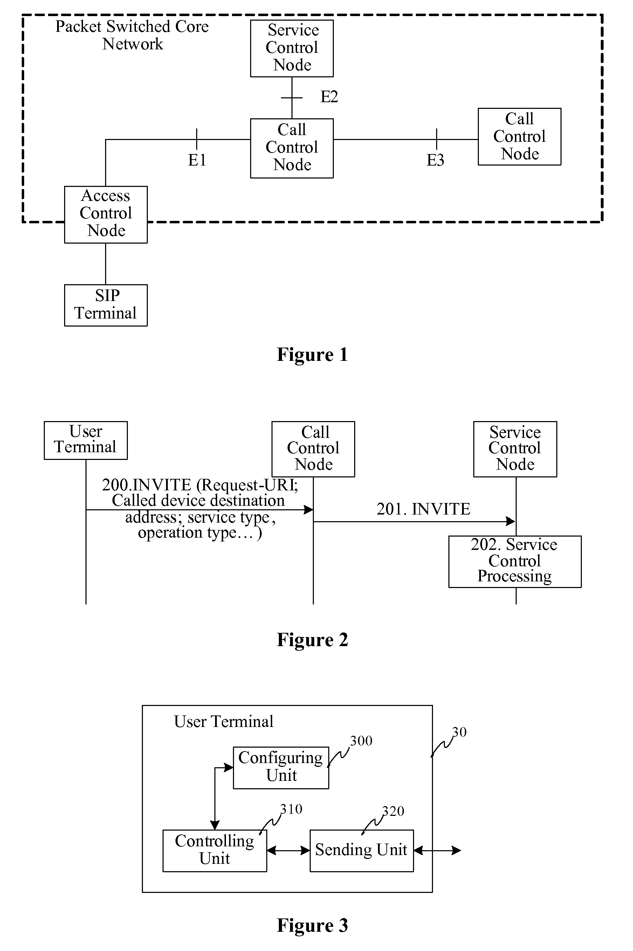

Figure 1 is a schematic diagram showing the networking of a packet switched core network, where SIP is used as the call control signaling. As shown in Figure 1:

A SIP terminal is a user terminal device that supports the SIP protocol and provides a packet switched network interface.

An access control node is a network node that provides the SIP terminal with functions of the packet switched core network such as registration, authorization and authentication. The terminal is registered on different call control nodes, and when the terminal initiates a call, the access control node routes the call to a call control node that the terminal pertains to. When the access control node and the call control node are different network entities, the interface E1 between them is a SIP interface. Optionally, when the access control node and the call control node are combined in one network entity, the interface E1 is a SIP interface or a user-defined internal interface.

The call control node provides the SIP terminal that accesses the packet switched core network with functions such as call control and routing. The call control node may trigger a call to a service control node. The interface E3 between the two call control nodes is a SIP interface.

The service control node provides the SIP terminal that accesses the packet switched core network with various service logic control functions, and provides an execution environment for hosts of various services. When the service control node and the call control node are in different network entities, the interface E2 between them be a SIP interface; and when the service control node and the call control node are combined in one network entity, the interface E2 is a SIP interface or a user-defined internal interface. There may exist a plurality of service control nodes that process different services, such as an AoC service control node for processing the AoC service and an MWI service control node for processing the MWI service.

In the packet switched core network shown in Figure 1, on a call control node, the information in the service activation information element is preconfigured to be one of the trigger rules that correspond to different services. When receiving the service activation message forwarded by the access control node, the call control node triggers the service activation message to a corresponding service control node through matching the information carried in the service activation message.

In the invention, the service activation message may be a SIP message, such as SIP INVITE message, SIP INFO message, SIP SUBSCRIBE message, SIP MESSAGE message, SIP REGISTER message. Optionally, the service activation message may also be a Hyper Text Transport Protocol (HTTP) message (in the IMS standard, there may exist HTTP interface(s) between the SIP terminal and the network server providing the service). In the service activation message, the service activation information element for carrying the information required by various service activation operations may be a Request-URI of the SIP request line and/or To header field, or may be a fixed extended header field that is applicable for all the service activation modes. The service activation information includes the service type for identifying different services and/or operation type for identifying the operation that is performed for the service. Furthermore, the service activation information may also include supplementary information.

In the SIP protocol, the identifier of the receiving device of a session request (called party) that is input through key-press by the user may be carried via the Request-URI of the SIP request line and *To* header field This is one of the basic functions of the SIP terminal. Therefore, if the service activation information that is required for realizing the service activation mode may be carried in the Request-URI and/or To header field, the SIP terminal may not be required to be extended.

In the SIP protocol, there are three formats for identification of the receiving device of the session request, i.e., SIP-URI, SIPS-URI and absolute URI. SIP-URI and SIPS-URI have similar description formats:

| | |
|---|---|
| SIP-URI | = "sip:" [userinfo] hostport uri-parameters [headers] |
| SIPS-URI | = "sips:" [userinfo] hostport uri-parameters [headers] |
| uri-parameters | = *(";" uri-parameter) |
| uri-parameter | = transport-param / user-param / method-param / ttl-param / maddr-param / lr-param / other-param |
| other-param | = pname ["=" pvalue] |

According to the description, SIP-URI and SIPS-URI have the same uniform resource identifier parameter, *uri-parameter.* The parameter *uri-parameter* may have a plurality of expressions. Therefore, an *other-param* without an explicit definition may be configured to be an expression that has an explicit definition. Optionally, an expression of the *uri-parameter* with an explicit definition may be newly added, such as:

```
 srv-param = srv-type, srv-op [,sub-info]
 srv-type = "srv="
 ("aoc" / "mwi" / "oir" / other-type)
 other-type = token
 srv-op = "op="
 ("register" / "cancel" / "verify" / "apply" / "non-apply" / other-op)
 other-op = token
 sub-info = sub-info-param *(COMMA sub-info-param)
 sub-info-param = generic-param
```

Here *srv-type, srv-op* and *sub-info* represent three kinds of information respectively, i.e., service type, operation type and supplementary information. Several examples are given with respect to the value of *srv-type,* such as AoC service, MWI service and OIR service. These services are all described and defined in TISPAN standards.

Several examples are also given with respect to the value of *srv-op,* such as register, cancel, verify, apply, i.e. "temporary activation", and non-apply, i.e. "temporary deactivation".

*Sub-info* may be one or more character strings with uncertain meanings, such as user number, password and time. The meaning of these character strings in each service activation mode is identified by the network. The aforementioned *srv-param* may also be used for the absolute uniform resource identifier (absolute URI), where the *srv-param* is added at the end of the absolute URI with a separator "?".

For example, the user terminal calls mary@home.com, and temporarily activates the application of the AoC service at the same time. Thus, the SIP request line and *To* header field of this outgoing call session may be described as follows:

```
 INVITE sip:mary@home.com ; srv=aoc, op=apply SIP/2.0

 To: <sip: mary@home.com ; srv=aoc, op=apply >
```

In another example, the user terminal subscribes for the MWI service from a mailbox vms@home.com, then the SIP request line and *To* header field of the subscription may be described as follows:

```
 INVITE sip:vms@home.com ; srv=mwi, op=register SIP/2.0

 To: < sip:vms@home.com ; srv=mwi, op=register >
```

Figure 2 is a flow chart for implementing the service activation mode according to the invention. As shown in Figure 2, the information required for the service activation operation is carried by the Request-URI in the INVITE message, and the main processing procedure for implementing the service activation mode is as follows.

Process 200: A user calls mary@home.com, and activates the application of the AoC service; the user terminal initiates a call session, and the SIP request line of the outgoing call session is described as follows:

```
 INVITE sip : mary@home.com ; srv=aoc, op=apply SIP/2.0
```

Process 201: A call control node receives the INVITE message, and triggers the call session to the service control node that processes the AoC service according to the information "srv=aoc" contained in the request line Request-URI in the INVITE message.

Process 202: The service control node receives the INVITE message, determines that the user requests to temporarily activate the AoC service for application in the current call according to the information "op=apply" contained in the Request-URI, and performs corresponding subsequent control processing.

Similarly, a new SIP header field *P-Service* is extended directly, and the service activation information may be carried in the header field. The description format of the above *srv-param* may be used again for the format of the *P-Service* header field. The processing procedure of the INVITE message is the same as shown in Figure 2, and the difference is that the call control node and the service control node obtain the service activation information from the *P-Service* header field in the INVITE message, so as to identify the specific service activation operation. According to the description, although the user terminal needs to support the newly extended SIP header field, this header field is applicable for all the services, i.e., it is not required to perform different extension adaptation for the service activation modes of different services. For example, when the user inputs a called user ID through key-press, the terminal interface displays parameters of the service activation mode such as "*srv*" actively, and prompts the user to input a specific parameter value such as *"aoc".* Optionally, the user may press a shortcut key representing this parameter actively, and then input a specific parameter value such as *"aoc".* The specific parameter value may also be supported by the terminal. For example, the terminal provides menu items directly, which display parameter values such as *"aoc"* to the user for selection.

In order to make the invention applicable for all the service activation modes of the service, the key point is that the required description manner of the service activation information should be universal. The specific analysis is as follows.

1. Besides the text description manner such as *"aoc"* presented in the above embodiment, it is also possible to use the service characteristic code directly to describe the service type. For example, the service characteristic code of Call Forwarding On Busy is "40" according to the standard in China. Therefore, when the user registers for the "Call Forwarding On Busy" service, the corresponding SIP request line may be described as follows:

```
 INVITE sip:as@home.com ; srv=40, op=register, 26540808 SIP/2.0
```

Therefore, the "service type" is pretty universal.

2. According to the above analysis, the operation type already includes five service activation modes, i.e., registration, cancellation, verification, temporary activation, temporary deactivation, and thus is universal.

3. The description format of the supplementary information includes one or more character strings with uncertain meanings, the specific meaning of these character strings in each service activation mode is identified by the network, and the terminal does not understand the specific meaning of these character strings. Therefore, the description format is universal. For example, for the registration of the "Call Forwarding On Busy" service in the above example, the user input 26540808 directly, and the network interprets that this is a forwarding number input by the user according to the service type and the operation type.

Certainly, some commonly used descriptions of the "supplementary information" may be further specified, such as num (number), pin (password), t (time) and 1 (service level). The registration of the "Call Forwarding On Busy" service in the above example may be described as follows:

```
 INVITE sip:as@home.com ; srv=40, op=register, num=26540808 SIP/2.0.
```

Hereinafter, it is taken as an example that the service characteristic code is used to describe the service type, so as to illustrate the specific implementing process of the method according to the invention. The following description will be presented for two cases.

The first case: the user performs service activation after a SIP session call is already initiated, the user maintains the existing call, and initiates a service activation message.

When the service activation message is a SIP INVITE message, the destination address of the Request-URI of the message is a service ID for representing the attribute of the service activation. The service ID may be a public service ID (PSI) representing the attribute of the service activation, such as a traditional telecommunication service ID telecommunication-services@as.home.net, or may be presented as an activation service ID temporary-services@as.home.net, or may also be the aforementioned as@home.com, etc. Furthermore, a parameter of the Request-URI or a header field is extended for transferring the service characteristic code. It is taken as an example that the user temporarily activates the "Malicious Call Trace" service, and it is hypothesized that the service characteristic code allocated to the service by the network is *33:

(1) If the service activation message transfers the service characteristic code by extending a parameter, for example, when an additional input parameter input-param is extended in the *uri-parameters* in the Request-URI for transferring the service characteristic code, the service activation message may be as follows:

```
 INVITE sip:telecommunication-services@as.home.net;
            input-param=*33 SIP/2.0
```

(2) If the service activation message transfers the service characteristic code by extending a header field of the service activation message, such as the header field P-SRV-INFO, the service activation message may be as follows:

```
 INVITE sip:telecommunication-services@as.home.net SIP/2.0
            P-SRV-INFO: *33
```

(3) If the service activation message extends the event header field, and transfers the service characteristic code with a service ID event packet in the event header field, for example, when the service ID event packet of the *Subscription* header field is represented as *srv-id,* and an ID parameter *id-param* in the event packet is used for transferring the service characteristic code, the service activation message may be as follows:

```
 INVITE sip:telecommunication-services@as.home.net SIP/2.0
 Subscription: srv-id; id-param=*33
```

Optionally, the service characteristic code may be used as the name of the event packet in the header field directly. An example is as follows:

```
 INVITE sip:telecommunication-services@as.home.net SIP/2.0
 Subscription: *33
```

Furthermore, when the service activation message is a SIP INVITE message, the service characteristic code may also be used as the public service ID in this message directly, so as to be used as the destination address of the Request-URI of the service activation message and represent the attribute of service activation without the necessity of extending the parameter or header field. For example:

```
 INVITE sip:*33@as.home.net SIP/2.0
```

Similarly, when the service activation message is a SIP INFO message, a parameter of the Request-URI or header field may be extended for transferring the service characteristic code. Optionally, the service characteristic code may be used directly as a public service ID, which is used as the destination address of the Request-URI and represents the attribute of service activation, without the necessity of extending the parameter or header field. It is still taken as an example here that the user temporarily activates the "Malicious Call Trace" service, then the service temporary activation message may be as follows:

```
 INFO sip :telecommunication-services@as.home.net;
           input-param=*33 SIP/2.0
```

or,

```
 INFO sip:telecommunication-services@as.home.net SIP/2.0
          P-SRV-INFO: *33
```

or,

```
 INFO sip:telecommunication-services@as.home.net SIP/2.0
          Subscription: srv-id; id-param=*33
```

or,

```
 INFO sip:*33@as.home.net SIP/2.0
```

When the service activation message is a SIP SUBSCRIBE message, it is taken as an example that the user temporarily activates the "Malicious Call Trace" service.

(1) If the service activation message uses the PSI as the Request-URI, for example, when the service ID event packet of the *Event* header field is represented as *srv-id,* and an ID parameter *id-param* is used in the event packet for transferring the service characteristic code, the service activation message may be as follows:

```
 SUBSCRIBE sip:telecommunication-services@as.home.net SIP/2.0
               Event: srv-id; id-param=*33
```

Similarly, the service characteristic code may also be used as the name of the event packet in the header field directly. For example:

```
 SUBSCRIBE sip:telecommunication-services@as.home.net SIP/2.0
               Event: *33
```

(2) If the service activation message uses the user ID of the SIP terminal as the Request-URI, for example, when the service ID event packet of the *Event* header field is represented as *srv-id,* and an ID parameter *id-param* is used in the event packet for transferring the service characteristic code, the service activation message may be as follows:

```
 SUBSCRIBE sip:user@example.com SIP/2.0
               Event: srv-id; id-param=*33
```

The service characteristic code may also be used as the name of the event packet in the header field directly. For example:

```
 SUBSCRIBE sip:user@example.com SIP/2.0
               Event: *33
```

(3) If the service activation message uses the service characteristic code as the public service ID directly, which is used as the destination address of the Request-URI, and meanwhile, a service activation event packet *srv-active* is extended in the *Event* header field, the service temporary activation message may be as follows:

```
 SUBSCRIBE sip:*33@as.home.net SIP/2.0
               Event: srv-active
```

When the service activation message is an HTTP message, the service parameter described with the eXtended Markup Language (XML) is allocated by the network to the service to be activated. At this point, the service activation message further includes the user ID. The service parameter and the user ID may be transferred with an XML Configuration Access Protocol (XCAP) message or a Simple Object Access Protocol (SOAP) message. It should be noted that when the service activation information is transferred with the HTTP message, although different descriptions may exist for respective service activation, it is only required that the service control node supports this situation. The SIP terminal only performs display via a page (such as webpage), and no support of the terminal is required.

The XCAP is taken as an example, and the description format is as follows:

```
 <xs:element name="MCID" substitutionGroup="ss:absService">
      <xs:element name="identity" type="xs : anyURI"
 substitutionGroup="cp:condition"/>
      <xs:element name="action-type" type="xs:boolean"
 substitutionGroup=" cp: action"/>
```

Here *"MCID"* represents the application name of the "Malicious Call Trace" service; *"identity"* represents the ID number of the user who temporarily activates the service, and the data type is a uniform resource identifier of any format (anyURI); *"action-type"* represents the activation type, and the data type is a Boolean variable (Boolean), for example, when *"action-type"* is set to 1, it represents that the service is activated. The specific definition of XCAP may be obtained from the relevant standard documents of TISPAN and IETF and will not be described again here.

The SOAP is taken as another example, and the description format is as follows:

```
 <SOAP-ENV:Body>
      <ServicesApplication>
         <ServiceName xsi:type="xsd:string">MCID</ServiceName>
    <identity xsi:type="xsd:string">user@example.com</identity>
  </SOAP-ENV:Body>
```

Here, *"ServicesApplication"* represents the name of the process on a service application server that is called remotely by a terminal. The parameter of this process is *"ServiceName".* When the value of this parameter is *"MCID",* it represents a call of the "Malicious Call Trace" service. *"ServiceName"* is another process parameter and represents the ID number of the user who activates the service. The specific definition of the SOAP may be obtained from the standard specification published by the World Wide Web Consortium (W3C), and will not be described again here.

When the SIP session initiated by the user is an instant message service, the message extending manner may be the same as the extending manner in the case of a call service, and will not be described again here.

The second case: a service is activated at the same time when the user initiates a SIP session. The user initiates a service activation message, and the service activation message initiates a call to a called party, i.e., the service activation message contains an explicit called party ID or an implicit called party ID. The explicit called party ID refers to a complete called number that can be routed and addressed directly, and the implicit called party ID refers to a called number such as an abbreviated number that needs to be further interpreted by the network.

When the service activation message is a SIP INVITE message, it is taken as an example that the user temporarily activates the "Temporary mode of Originating Identification Restriction" service, and it is hypothesized that the service characteristic code allocated to the service by the network is *62, and the Request-URI is used as PSI, then there are following examples.

(1) The service activation message transfers the service characteristic code by extending a parameter, for example, an additional input parameter *input-param* is extended in the *uri-parameters* in the Request-URI, the service activation message may be as follows:

```
 INVITE sip:telecommunication-services@as.home.net;
 input-param=*62mary@example.com SIP/2.0
```

Here mary@example.com is the called party ID.

(2) The service activation message transfers the service characteristic code by extending an service information input header field, for example, the header field is P-SRV-INFO, then the service activation message may be as follows:

```
 INVITE sip:telecommunication-services@as.home.net SIP/2.0
 P-SRV-INFO: *62mary@example.com
```

(3) The service activation message extends a header field *Subscription,* and transfers the service characteristic code via a service temporary activation event packet in the header field *Subscription.* For example, the service temporary activation event packet in the header field *Subscription* is represented as *srv-op,* and an operation input parameter *set-param* is used in the event packet for transferring the service characteristic code. Thus, the service activation message may be as follows:

```
 INVITE sip:telecommunication-services@as.home.net SIP/2.0
 Subscription: srv-op; set-param=*62mary@example.com
```

Similarly, the service characteristic code may be used as the name of the event packet in the header field directly, for example:

```
 INVITE sip:telecommunication-services@as.home.net SIP/2.0
 Subscription: *62; set-param=mary@example.com
```

Furthermore, as stated in the first case, the service characteristic code may be used as the public service ID directly, which is used as the destination address of the Request-URI. For example, when the user temporarily activates the "Temporary mode of Originating Identification Restriction" service, the service activation message may be as follows:

```
 INVITE sip:*62@as.home.net; input-param=mary@example.com SIP/2.0
 or
 INVITE sip:*62@as.home.net SIP/2.0
 P-SRV-INFO: mary@example.com
 or
 INVITE sip:*62@as.home.net SIP/2.0
 Subscription: srv-op; set-param=mary@example.com
```

Furthermore, the called party ID may be used as the destination address of the Request-URI directly. For example, when the user temporarily activates the "Temporary mode of Originating Identification Restriction" service, then:

(1) The service activation message transfers the service characteristic code by extending a parameter, for example, an additional input parameter *srv-id-param* is extended in the *uri-parameters* in the Request-URI for transferring the service characteristic code, then the service activation message may be as follows:

```
 INVITE sip:mary@example.com; srv-id-param=*62 SIP/2.0
```

(2) The service temporary activation message transfers the service characteristic code by extending a service ID header field. For example, the header field is P-SRV-ID, then the service activation message may be as follows:

```
 INVITE sip:mary@example.com SIP/2.0
 P-SRV-ID: *62
```

(3) The service temporary activation message extends the header field *Subscription,* and transfers the service characteristic code via a service ID event packet in the header field *Subscription.* For example, the service ID event packet in the header field *Subscription* is represented as *srv-id,* and an ID parameter *id-param* is used in the event packet for transferring the service characteristic code. Thus, the service activation message may be as follows:

```
 INVITE sip:mary@example.com SIP/2.0
 Subscription: srv-id; id-param=*62
```

Similarly, the service characteristic code may be used as the name of the event packet in the header field directly. For example:

```
 INVITE sip:mary@example.com SIP/2.0
 Subscription: *62
```

When the service activation message is SIP MESSAGE, the message extending manner may be the same as that in the call service, and will not be described again here.

The service characteristic code is taken as an example in above description to illustrate the exemplary methods for activating the service by the user after a call session is established or during the establishment of a call session. These methods are also applicable for other service type description formats, such as the aforementioned text description manner, such as *"aoc".*

Figure 3 is a schematic diagram showing the structure of a terminal device according to the invention. As shown in Figure 3, a user terminal 30 for implementing the method according to the invention includes a configuring unit 300, a controlling unit 310 and a sending unit 320. It should be noted that other function units for accomplishing the existing fundamental functions are not shown in Figure 3.

The configuring unit 300 is adapted to provide the user with an operation interface, and receive service activation information input by the user that is required for the service activation operation.

The controlling unit 310 is logically connected with the configuring unit 300, and is adapted to write the service activation information received by the configuring unit 300 into a service activation information element in the service activation message. The service activation information element is adapted to carry the service activation information required for various service activation operations.

The sending unit 320 is adapted to send the service activation message generated.

According to the invention, the user terminal may be a SIP user terminal device. At this point, the configuring unit 300 and the controlling unit 310 as well as the sending unit 320 are arranged on the terminal device. Optionally, the user terminal may be constituted with a terminal device in the traditional circuit switched domain and a corresponding SIP proxy device. The terminal device in the traditional circuit switched domain may be a Plain Old Telephone Service (POTS) terminal or an ISDN terminal, and the SIP proxy device is a device that is connected to and controls the terminal device in the traditional circuit switched domain in downlink, and provides a SIP interface in uplink, such as a SIP Integrated Access Device (IAD) and an Access Gateway Control Function (AGCF) device. At this point, the configuring unit 300 is arranged on the terminal device in the traditional circuit switched domain, and the controlling unit 310 and sending unit 320 are arranged on the SIP proxy device. For example, the user may input the service activation information via key-press on a POTS terminal or an ISDN terminal to activate a service. When receiving the service activation information, the SIP proxy device converts the service activation information received into a service activation message such as a SIP INVITE message, a SIP SUBSCRIBE message or a SIP INFO message according to the method provided by the invention, and sends the message to the network.

Only the preferred embodiments of the invention are described above, which are not intended to restrict the protection scope of the present invention. Therefore, any modification, substitution or improvement made within the principle of the present invention should be included in the protection scope of the present invention.

## Claims

1. A method for implementing a service activation operation, comprising:
putting service activation information input by a user into a service activation information field of a service activation message, and sending the service activation message to a network, the service activation information field being adapted to carry information required by various service activation operations; and
triggering, by the network, the service activation operation according to the service activation information received.

2. The method according to claim 1, wherein the service activation information comprises:
a service type, adapted to identify different services, and/or
an operation type, adapted to identify different operations performed for the services.

3. The method according to claim 2, wherein the service activation information further comprises: supplementary information; and the supplementary information comprises: a user number and/or a password and/or time.

4. The method according to claim 1, wherein the service activation message is a Session Initiation Protocol (SIP) message; and the SIP message comprises: a SIP INVITE message, a SIP INFO message, a SIP SUBSCRIBE message, a SIP MESSAGE message and a SIP REGISTER message; or
the service activation message is a Hyper Text Transport Protocol (HTTP) message.

5. The method according to claim 1, wherein the service activation message is a SIP message; and
the service activation information element is a parameter in a Request-Uniform Resource Identifier and/or in a *To* header field of the SIP message.

6. The method according to claim 1, wherein the service activation information field is a newly added header field or an event packet of the SIP message.

7. The method according to claim 5 or 6, wherein the Request-Uniform Resource Identifier in the SIP message carries a public service identifier or a user identifier.

8. The method according to claim 1, wherein the service activation message is an HTTP message; and
the service activation information is carried with an eXtended Markup Language Configuration Access Protocol message or a Simple Object Access Protocol message.

9. The method according to claim 1, wherein on a call control node in the network, a trigger rule of information in the service activation information element corresponding to different services is preconfigured; and a method for triggering the service activation operation is:
triggering the service activation message to a corresponding service control node through matching information carried in the service activation message with a trigger rule, when the call control node receives the service activation message.

10. A user terminal, comprising:
a configuring unit, adapted to provide a user with an operation interface, and receive service activation information input by the user that is required for an service activation operation;
a controlling unit, adapted to write the service activation information received by the configuring unit into a service activation information element in a service activation message, wherein the service activation information element is adapted to carry the service activation information required for various service activation operations; and
a sending unit, adapted to send the service activation message generated.

11. The user terminal according to claim 10, wherein the controlling unit writes the service activation information into an extended parameter in a Request-Uniform Resource Identifier and/or in a *To* header field of a SIP message.

12. The user terminal according to claim 10, wherein the controlling unit writes the service activation information into a newly extended header field or event packet in the SIP message.

13. The user terminal according to claim 10, wherein the controlling unit writes the service activation information into a Simple Object Access Protocol message or an eXtended Markup Language Configuration Access Protocol message that belongs to HTTP messages.

14. The user terminal according to claim 10, wherein the user terminal is a SIP user terminal device; and
the configuring unit, controlling unit and sending unit are arranged in the SIP user terminal device.

15. The user terminal according to claim 10, wherein the user terminal comprises a terminal device in a traditional circuit switched domain and a corresponding SIP proxy device; and
the configuring unit is arranged in the terminal device in the traditional circuit switched domain, and the controlling unit and the sending unit are arranged on the SIP proxy device.
